(19) Europäisches Patentamt
European Patent Office
Office européen des brevets

(11) Publication number: **0 345 854 B1**

(12) **EUROPEAN PATENT SPECIFICATION**

(45) Date of publication of patent specification: **22.12.93**

(51) Int. Cl.5: **C08L 73/00**, C08K 7/10, //(C08L73/00,53:02)

(21) Application number: **89201338.4**

(22) Date of filing: **24.05.89**

(54) **Polymer composition.**

(30) Priority: **08.06.88 US 203975**
**08.06.88 US 203959**
**31.08.88 US 239095**
**31.08.88 US 239094**

(43) Date of publication of application:
**13.12.89 Bulletin 89/50**

(45) Publication of the grant of the patent:
**22.12.93 Bulletin 93/51**

(84) Designated Contracting States:
**AT BE CH DE ES FR GB IT LI NL SE**

(56) References cited:
**FR-A- 2 354 368**
**US-A- 3 929 727**
**US-A- 4 427 828**

**PATENT ABSTRACTS OF JAPAN, vol. 8, no. 122 (C-227)[1559], 8th June 1984; & JP-A-59 36 153**

(73) Proprietor: **SHELL INTERNATIONALE RESEARCH MAATSCHAPPIJ B.V.**
**Carel van Bylandtlaan 30**
**NL-2596 HR Den Haag(NL)**

(72) Inventor: **Gergen, William Peter**
**11311 Hylander**
**Houston Texas 77007(US)**
Inventor: **Lutz, Robert Gardiner**
**632 Vista Grande Place**
**Santa Rosa California 95401(US)**
Inventor: **George, Eric Richard**
**13703 Overbrook Lane**
**Houston Texas 77077(US)**

EP 0 345 854 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to an improved polymer composition comprising predominantly a linear alternating polymer of carbon monoxide and at least one ethylenically unsaturated compound.

The class of polymers of carbon monoxide and olefin(s) has been known for some time.

More recently, the class of linear alternating polymers of carbon monoxide and at least one ethylenically unsaturated compound has become of greater interest in part because of the greater availability of the polymers. These polymers, often referred to as polyketones or polyketone polymers, have been shown to be of the repeating formula -CO-(A)-wherein A is the moiety of ethylenically unsaturated compound polymerized through the ethylenic unsaturation. For example, when the compound is ethylene, the polymer is represented by the repeating formula $-CO(CH_2-CH_2)$. A general process for the more recent production of the polymers is illustrated by e.g. European Patent Applications 121,965 and 181,014. The process typically involves a catalyst composition formed from a compound of palladium, cobalt or nickel, the anion of a strong non-hydrohalogenic acid and a bidentate ligand of phosphorus, arsenic or antimony.

The resulting polymers are relatively high molecular weight thermoplastics having established utility in the production of shaped articles such as containers for the food and drink industry and internal and external parts for automotive applications which are produced by processing the polyketone polymers according to known methods. For some particular applications it has been found desirable to have properties for a polymeric composition which are somewhat different from those of the polyketone polymer. It would be of advantage to retain the more desirable properties of the polyketone polymer and yet improve other properties, in particular the impact strength and the flexural modulus.

It has now been found that a blend of polyketone polymer with certain block copolymers provides such improved properties.

The present invention thus relates to a polymer composition characterized by comprising a non-miscible blend of a linear alternating polymer of carbon monoxide and at least one ethylenically unsaturated compound, having a LVN of 1.5 to 2, with from 2 to less than 10%wt of an at least partially hydrogenated block copolymer having at least one A block that is a predominantly polymerized vinyl aromatic compound block and at least one B block that is a predominantly polymerized conjugated alkadiene block.

The polyketone polymers which are employed in the compositions of the invention are linear alternating polymers of carbon monoxide and at least one ethylenically unsaturated compound. The unsaturated compound may be a hydrocarbon or a hetero compound, e.g. an acrylate. Suitable ethylenically unsaturated hydrocarbons for use as precursors of the polyketone polymers have up to 20 carbon atoms inclusive, preferably up to 10 carbon atoms inclusive, and are aliphatic such as ethene and other alpha-olefins including propene, butene, isobutene, l-hexene, l-octene and l-dodecene, or are arylaliphatic containing an aromatic substituent on an otherwise aliphatic molecule, particularly an aromatic substituent on a carbon atom of the ethylenic unsaturation. Illustrative of this latter class of ethylenically unsaturated hydrocarbons are styrene, m-methylstyrene, p-ethylstyrene and p-methylstyrene. Preferred polyketone polymers are copolymers of carbon monoxide and ethene or are terpolymers of carbon monoxide, ethene and a hydrocarbon of at least 3 carbon atoms, particularly an alpha-olefin such as propene.

The structure of the polyketone polymers is that of a linear alternating polymer of carbon monoxide and ethylenically unsaturated compound and the polymer will contain substantially one moiety of carbon monoxide for each moiety of hydrocarbon. When terpolymers of carbon monoxide, ethene and a second hydrocarbon are employed in the blends of the invention, there will be at least about 2 units incorporating a moiety of ethylene for each unit incorporating a moiety of the second hydrocarbon, preferably from 10 units to 100 units incorporating a moiety of ethylene for each unit incorporating a moiety of the second hydrocarbon. The polymer chain is therefore illustrated by the formula

$$-[CO-(CH_2-CH_2)]_x-[CO-(D)]_y-$$

wherein D is the moiety of the second hydrocarbon polymerized through the ethylenic unsaturation. The $-CO(CH_2-CH_2)$ units and the -CO-(D)- units are found randomly throughout the polymer chain and the ratio of y:x is no more than 0.5. In the modification where a copolymer of carbon monoxide and ethene is employed in the blends of the invention there will be no second hydrocarbon present in the polymer chain and the polymer is represented by the above formula wherein y = 0. When y is other than 0, i.e., terpolymers are employed, ratios of y:x from 0.01 to 0.1 are preferred. The end groups or "caps" of the polymer chain will depend upon what materials are present during the production of the polymer and whether and how the polymer is purified. The precise physical properties of the polymers will not depend

upon the particular end group to any considerable extent so that the polymer is fairly represented by the above formula for the polymeric chain.

The linear alternating polymer appears to present synergy with the second component when the LVN is in the range of 1.5 to 2.0, measured at 60 °C in m-cresol by standard capillary viscosimetrics.

A method of producing the polymers which is now becoming conventional is to contact the carbon monoxide and hydrocarbon in the presence of a catalyst composition formed from a palladium compound, the anion of a non-hydrohalogenic acid having a pKa below about 6 and a bidentate ligand of phosphorus. Such a process for the production of polyketones is illustrated in EP-A-222454, for example.

The second component of the compositions of the invention is a modified block copolymer which has been partially hydrogenated and optionally, preferably, further modified by the grafting of a maleic acid compound onto the block copolymer chain. The term "block copolymer" is used to indicate a thermoplastic elastomer characterized by at least one block of at least predominantly polymerized vinyl aromatic hydrocarbon (A blocks) and at least one block of at least predominantly polymerized alkadiene (block B).

The vinyl aromatic hydrocarbon useful as the precursor of the A blocks has a vinylidene group, i.e. a $>C=CH_2$ group, attached directly to an aromatic ring and up to 12 carbon atoms inclusive. Preferred vinyl aromatic compounds are styrene and styrene homologs such as those of the formula

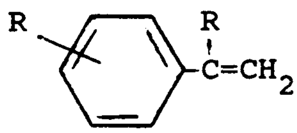

wherein R independently is hydrogen or alkyl of up to 4 carbon atoms inclusive. Illustrative of such compounds are styrene, alpha-methylstyrene, alpha-ethylstyrene, p-methylstyrene, p-ethylstyrene, m-propylstyrene and alpha,4-dimethylstyrene. Styrene and alpha-methylstyrene constitute a preferred class of vinyl aromatic compounds and particularly preferred is styrene.

The A blocks of the block copolymer independently are at least predominantly the polymerized vinyl aromatic compound and preferably are homopolymeric blocks. Alternatively, however, one or more A blocks are blocks wherein some of the monomer of block B is copolymerized with the predominant monomer of block A. Such blocks are termed "tapered" and have at least 85% by mol and preferably at least 93% by mol of the polymerized vinyl aromatic hydrocarbon with any remainder being the conjugated alkadiene of block B. Blocks A containing a mixture of vinyl aromatic hydrocarbon monomers are also suitable but less preferred. The average molecular weight of an A block is typically from 5,000 to 125,000 while A blocks of an average molecular weight from 7,000 to 125,000 are preferred.

Each B block independently is at least predominantly polymerized conjugated alkadiene. The alkadiene useful as the monomer for a B block are conjugated alkadienes of up to 8 carbon atoms inclusive such as those conjugated alkadienes of the formula

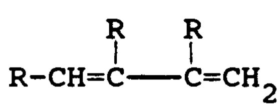

wherein each R has the previously stated significance. Illustrative of such alkadienes are butadiene, isoprene, 2,3-dimethylbutadiene, 1,3-octadiene, 1,3-pentadiene and 2-methyl-1,3-hexadiene. Preferred alkadienes are butadiene and isoprene and butadiene is particularly preferred. Each B block is at least predominantly polymerized alkadiene with the B block being at least 85% by mol and preferably at least 93% by mol of polymerized alkadiene with any remainder being the vinyl aromatic hydrocarbon of the A blocks in the case of a tapered block. Homopolymeric blocks as B block are preferred although tapered blocks and blocks of polymerized mixed alkadienes are also satisfactory. Within a polymerized alkadiene block two modes of polymerization are possible and generally observed. In what is termed a 1,4 polymerization, both carbon-carbon double bonds of the conjugated diene are involved in the polymerization such that each carbon atom that forms the double bonds is incorporated within the polymer chain and includes two carbons joined by an ethylenic linkage. In 1,2 polymerization, the polymerization involves only one carbon-carbon double bond of the conjugated alkadiene and only two carbon atoms are added to the polymer chain. The carbon atoms of the conjugated diene that are not incorporated within the polymer chain generally form one or more pendant groups that may contain an ethylenic linkage.

Preferred block copolymers are those wherein from about 25% to about 55% of the units of each B block are the result of 1,2-polymerization. The average molecular weight of a B block is suitably from 10,000 to 300,000, preferably from 30,000 to 150,000.

Within the block copolymer, the A blocks will total from 2% by weight to 55% by weight based on total block copolymer. Contents of A block from 10% by weight to 30% by weight, same basis, are preferred. The total molecular weight of the block copolymer will average from 25,000 to 350,000, preferably from 35,000 to 300,000. These average molecular weights are determined by conventional techniques such as tritium counting methods or osmotic pressure measurements.

The structure of the block copolymer will depend upon the method of polymerization employed to produce the block copolymer. In one modification, the block copolymer is termed linear and is produced by sequential polymerization of the blocks. By way of example in producing a three block copolymer, the vinyl aromatic hydrocarbon of the A block is polymerized through the use of an initiator, preferably an alkyl lithium compound. The conjugated alkadiene of block B is then introduced and subsequently the vinyl aromatic hydrocarbon required for the second A block. Such a block copolymer is characterized as ABA. A two block or diblock polymer is produced by polymerizing an A block using a lithium initiator and subsequently introducing the alkadiene required for the B block. Such a polymer would be characterized as AB. Substantially complete polymerization of each monomer prior to introducing the monomer of the next block will result in the production of homopolymeric blocks. If, prior to the complete polymerization of any one block the monomer of the next block is introduced, tapered blocks will result. Similar sequential polymerization techniques are employed to produce block copolymers characterized as ABABA, ABAB, ABABABA, or even polymers of a higher number of blocks. Production of block copolymers, particularly those of a relatively high number of blocks, is also accomplished by coupling agent to couple or connect growing polymer chains. Use of a difunctional coupling agent such as dihaloalkane will result in linear polymers but use of a coupling agent having a functionality of 3 or more, e.g., silicon tetrahalides or alkyl esters of dicarboxylic acids, will result in polymers which are termed "radial" or "branched" respectively.

These block copolymers are well known in the art and the characterization and production of such polymers are illustrated by US-3,251,905, US-3,390,207, US-3,598,887 and US-4,219,627.

The block copolymers useful as (the precursors of) the component of the compositions of the invention are preferably linear polymers of the following types: polystyrene-polybutadiene (SB), polystyrene-polyisoprene (SI), polystyrene-polybutadiene-polystyrene (SBS), polystyrene-polyisoprene-polystyrene (SIS), poly(alpha-methylstyrene)-polybutadiene-poly(alpha-methylstyrene), and poly(alpha-methylstyrene)-polyisoprene-poly(alpha-methylstyrene). Block copolymers of the SBS type are particularly preferred. These block copolymers are now conventional and a number are commercially available.

To produce the components of the blends of the invention, the block copolymers are partially hydrogenated and preferably then modified further by reaction with a maleic acid compound. The hydrogenation of block copolymers is also well known in the art and includes catalytic hydrogenation in the presence of Raney Nickel or elemental noble metal in finely divided form including platinum or palladium. Such hydrogenation typically results in hydrogenation of most, if not all, of the unsaturation of the aromatic rings in the A end-blocks as well as the ethylenic unsaturation of aliphatic B block. In the production of the components of the blends of the invention, however, a partial hydrogenation is employed which serves to hydrogenate most of the ethylenic unsaturation of the aliphatic B block while not hydrogenating the unsaturation of the aromatic rings of the A blocks. The process of hydrogenation is illustrated by the disclosures of US-3,113,986 and US-4,226,952, which are incorporated by reference herein. Preferred partially hydrogenated block copolymers are those wherein no more than 25% and preferably no more than 5% of the aromatic unsaturation has been hydrogenated, and wherein the residual unsaturation of the mid-blocks is from about 0.5% to about 20% of the unsaturation prior to hydrogenation.

The partially hydrogenated block copolymer is often identified by the structure of the block copolymer precursor and the "apparent" structure of the aliphatic block. Thus, partial hydrogenation of an SBS block polymer will result in a polymer having a hydrogenated mid-block which is apparently polyethylene in the case of a mid-block unit produced by 1,4-polymerization and ethylene/butylene copolymer in the case of a mid-block unit produced with a high proportion of 1,2-polymerization. These are indicated by SES and SEBS respectively. A corresponding diblock polymer would be termed SE or SEB. The polymer produced by partial hydrogenation of a SIS block copolymer of a high degree of 1,4 structure in the mid-block is termed, upon hydrogenation, a SEPS polymer because of the similarity of the mid-block to an ethylene/propylene copolymer.

To produce the maleated, partially hydrogenated block copolymers preferred as components of the blends of the invention, partially hydrogenated block copolymers of the SES/SEBS type are preferred wherein units of the mid-block are from 45% to 65% of the E type mid-block with the remainder being of

the EB type. The partially hydrogenated block copolymers of these types are also well known in the art with a number being commercial, for example, certain of the partially hydrogenated block copolymers marketed as "thermoplastic rubber".

The maleated, partially hydrogenated block copolymer preferably employed as a component of the blends of the invention is an adduct of the partially hydrogenated block copolymer and a maleic acid compound. The maleated materials are illustratively produced by addition of a hydrogen atom located on a carbon atom allylic to residual mid-block unsaturation of the partially hydrogenated block copolymer to the carbon-carbon double bond of the maleic acid compound together with the formation of a carbon-carbon bond between the maleic acid compound and the polymer chain of the partially hydrogenated block copolymer.

Maleic acid compounds which are suitably employed in the production of the maleated, partially hydrogenated block copolymers are maleic acid, maleic anhydride, mono-alkyl esters of maleic acid wherein the alkyl is alkyl of up to 4 carbons inclusive, the mono-amide of maleic acid and maleic imide. Of these, the use of maleic anhydride is preferred.

The maleated, partially hydrogenated block copolymers are known in the art as is the method of their production. In general, the process for the production of the maleated product is a graft process wherein the maleic acid compound is grafted onto the mid-block of the partially hydrogenated block copolymer chain. In one modification the partially hydrogenated block copolymer and the maleic acid compound are contacted in the presence of a free radical initiator which is preferably a peroxy compound.

The extent of maleation of the partially hydrogenated block copolymer is dependent in part on the residual unsaturation of the polymer aliphatic block. In terms of the polymers as described above, sufficient maleic acid compound is reacted with the partially hydrogenated block copolymer to produce a maleated derivative containing from 0.02% by weight to 20% by weight, based on total polymer, of the moiety derived from the maleic acid compound grafted onto the polymer aliphatic block. Preferably the maleated polymer will contain from 0.1% by weight to 10% by weight, same basis, of the maleic acid compound moiety and most preferably from 0.2% by weight to 5% by weight of the maleic acid compound moiety.

In general, the solvent free, "extruder-type" maleation process is preferred. Disclosures of such processes, now conventional, as well as the maleated products are found in US Patent Nos. 4,292,414, 4,427,828, 4,628,072, 4,659,970 and 4,657,971. Other processes are disclosed by US-4,578,429 and US-4,670,173.

Certain of the maleated, partially hydrogenated block copolymers are commercial and are marketed by companies associated to the Applicant. A particularly preferred maleated, partially hydrogenated block copolymer is marketed as KRATON G 1901X Thermoplastic Rubber (KRATON is a trade mark) and is characterized as a maleated block copolymer of the SES/SEBS type with a maleic acid functionality, as grafted maleic anhydride, of 2% by weight.

A very suitable composition thus comprises one wherein each A block of the block copolymer is selected from a group consisting of styrene and alpha-methylstyrene, the average molecular weight of each A block being from 5,000 to 125,000;

each B block of the block copolymer is selected from a group consisting of butadiene and isoprene, the average molecular weight of each B block being from 10,000 to 300,000;

the A blocks being from 2% by weight to about 55% by weight of the total block copolymer;

the block copolymer has a residual B block unsaturation from 0.5% to 20% of the original unsaturation of the B block of said block copolymer; and

the block copolymer has from 0.02% by weight to 20% by weight, based on total polymer, of moieties of a maleic acid compound grafted to the A block.

The method of producing the blend of the polyketone polymer and the (optionally maleated) partially hydrogenated block copolymer is not critical so long as a uniform blend of the components is produced. The polyketone/modified block copolymer blend is a non-miscible blend with the partially hydrogenated block copolymer existing as a discrete phase within the polyketone matrix and having a phase size of from 0.2 microns to 2 microns, more typically on the order of 0.3-0.4 microns. The blend will therefore not be homogeneous but the distribution of the modified block copolymer throughout the polyketone polymer matrix will be substantially uniform. The methods of blending the components are those which are conventional for non-miscible polymer systems. The polymeric materials are blended in a co-rotating twin screw extruder in one modification to produce the blend as an extrudate. In an alternate modification the components are blended in a mixing device which exhibits high shear prior to injection moulding.

Suitably the composition comprises as an additional component a ceramic fiber.

The reinforcing fiber suitable for use in the compositions of the invention is called refractory ceramic fiber, (RCF), also referred to as ceramic fiber or alumina-silica fiber. RCF is typically composed of about an

equal parts blend of the oxides silica and alumina. In contrast to silicate glasses, such as E-glass or mineral fiber, RCF has only trace or slightly higher amounts of the oxides of alkali metals such as sodium, alkaline earth metals such as calcium, and oxides of other metals such as titanium, and iron. The very low amounts of alkali present in RCF provide a surface that is generally free of alkali metal ion exchange and interactions, and is inherently more resistant to moisture attack. Although there are few monovalent cations on the fiber surface, there are silanol groups (-Si-OH) on the surface which can interact to provide surface modification to a fiber/matrix interface.

Refractory ceramic fibers are conventionally prepared in a melting operation by fusing raw materials in an electric arc furnace to produce a molten stream. The molten stream is impinged on by air under high pressure or dropped onto spinning wheels which separates the stream into tiny fragments. The fragments form fiber and are rapidly cooled. Also produced in the melt process are molten droplets called "shot" which are spherical particles that do not transform into fibers. RCF can be processed to remove the shot, but typically the shot content does not significantly detract from the overall properties of the ceramic fiber. RCF is commercially available and has traditionally been used in mat or textile form in high temperature applications such as furnace insulation. The fibers are also useful as reinforcements for polymeric products and are commercially used as such. However, the physical dimensions of the ceramic fibers are of some importance to successful utilization in a particular application as are the presence or absence of a sizing material or a coupling agent for the fibers and the nature of the sizing or coupling agent.

In the preferred polyketone/maleated, partially hydrogenated block copolymer/ceramic fiber compositions of the invention, the ceramic fibers which contribute the most desirable properties to the composition are chopped ceramic fibers of circular cross-section. The fibers have an average diameter from about 1 micron to about 10 microns, preferably from 2 microns to 4 microns. Fibers of greater or lesser diameter are satisfactory but fibers of too small a diameter do not provide the desired strength and fibers of too large a diameter contribute too much weight for the resulting strength and may not be economical. Although in some applications the very short milled ceramic fibers or the long continuous ceramic fibers are satisfactory, in the preferred compositions of the invention it is preferred to use short chopped ceramic fibers. Lengths of ceramic fiber from 0.35 mm to 15 mm are suitable. While somewhat longer and somewhat shorter lengths are also useful, too long a ceramic fiber detracts from the processability of the composition while too short a fiber does not provide the desired strength. It is recognized that the actual length of the ceramic fibers in the compositions will depend to some extent upon the method of blending or mixing the components, as this may mechanically break down the length of the ceramic fibers.

The ceramic fibers to be used as reinforcements for plastic materials may be provided by the manufacturer with a coating of a sizing or a coupling material or agent, which terms are often used interchangeably. The nature of the sizing or coupling agent will influence the interfacial shear strength of the fiber and the polymer matrix, i.e., the degree to which the polymer and ceramic fiber will adhere. Improvement in mechanical properties, such as tensile strength, result when a relatively high degree of adhesion occurs between the polymer and the fiber. To contribute strength to a polymer blend, the interfacial shear strength will be at least comparable in magnitude to the shear strength of the polymer so that there will be good adhesion between the polymer and the ceramic fiber. The interfacial shear strength is influenced by the polarity of the polymer so that for some polymers certain sizings or coupling agents work better than others. For the case of blends containing polyketone polymers a variety of sizings are suitable. Such sizings are generally characterized by the general nature of the size rather than the specific chemical structures which are often proprietary to the ceramic fiber manufacturer. Suitable sizings include water emulsions of starch and lubricating oil, aqueous dispersions of surface active materials and lubricants, silicon-containing materials such as vinyl silanes, alkyltrimethoxysilanes, amino silanes, trimethoxysilanes which may also contain urethane, acrylate or epoxy functionalities, and non-polar hydrocarbons. Ceramic fibers containing such sizings are commercially available. The ceramic reinforcement is suitably present in an amount of from 0.1% by weight to 45% by weight, based on total blend. Amounts from 0.5% by weight to 35% by weight on the same basis are preferred.

Additionally, a third (or fourth) component may optionally be added to this composition. This component can be up to 5wt% of a processing aid, such as a copolymer of an alpha-olefin and an unsaturated carboxylic acid. Amounts of from 0.1wt% to 5wt% may be used, for example 1wt%, 2wt%, or 5wt%. The olefin-unsaturated acid copolymers which can be blended with the composition according to the invention suitably are copolymers of ethene and alpha,beta-ethylenically unsaturated carboxylic acids. Although a variety of alpha,beta-ethylenically unsaturated carboxylic acids of up to 10 carbon atoms, or in some cases more, is useful as a component of the copolymers, e.g., 2-hexanoic acid, 2-octenoic acid and 2-decenoic acid, the preferred unsaturated acids are those of up to 4 carbon atoms which are acrylic acid, methacrylic acid and crotonic acid. Acrylic and methacrylic acid are particularly preferred components of the unsaturated acid copolymer.

The ethene-unsaturated acid copolymers are those copolymers having a relatively large proportion of ethylene and a relatively small proportion of the unsaturated acid. Typical ethene copolymers are from 10% by weight to 95% by weight based on total copolymer of the alpha,beta-ethylencially unsaturated carboxylic acid. The copolymers preferably have from 5% by weight to 12% by weight based on total copolymer of the unsaturated acid.

The method by which the copolymers are produced is not material and ethylene-unsaturated acid copolymers produced by a variety of methods are useful in the blends of the invention. A number of ethylene-acrylic acid copolymers and ethylene-methacrylic acid copolymers are commercially available. A general discussion of the production of olefin-unsaturated acid copolymers is found in US-3,520,861 and US-4,351,931.

The blends of the invention may also include conventional additives such as antioxidants, stabilizers, fire resistant materials, reinforcements, mould release agents and colorants which increase the processability of the polymers or modify the properties of the resulting blend. Such additives are added by conventional methods prior to, together with or subsequent to the blending of the polyketone polymer and the maleated, partially hydrogenated block copolymer.

The blends of the invention are characterized by increased modulus of elasticity when compared to the polyketone polymer. The blends are of particular utility where production of articles which require toughness and strength when exposed to reduced temperatures and physical stress. The blends are processed by means of the usual techniques such as extrusion or injection moulding into sheets, films, fibers, plates and shaped articles. Illustrative of such applications are the production of both internal and external parts for the transportation and related industries and structural parts for utilization in the construction industry.

The invention is further illustrated by the following Examples.

EXAMPLE 1

A) A terpolymer of carbon monoxide, ethene and propene was produced by contacting the monomers in the presence of a catalyst composition formed from palladium acetate, the anion of trifluoroacetic acid and 1,3-bis[di(2-methoxyphenyl)phosphino]propane. The terpolymer had a melting point of 220 °C and a limiting viscosity number (LVN) of 1.96 measured at 60 °C in m-cresol in a standard capillary viscosity measuring device.

B) The polyketone polymer of paragraph A was blended with various quantities of a maleated, partially hydrogenated block copolymer available as Thermoplastic Rubber from the Applicant. The hydrogenated block copolymer was of the SES/SEBS type having styrene end blocks on the order of 28% by weight and a hydrogenated butadiene mid-block on the order of 72% by weight. Employing the residual unsaturation of the mid-block, 2% by weight of maleic anhydride had been graft polymerized on the partially hydrogenated block copolymer. The polymer has a specific gravity of 0.91 g/ml, a tensile strength of 34.5 MPa and a solution viscosity (20%wt polymer in toluene) at 25 °C of 6,000 cP.

The blends were produced by dry mixing pellets of the polymeric components then melt blending the components in a 30mm co-rotating twin screw extruder having seven zones and a total L/D ratio of 27/1. The melt temperature of the die was maintained at 260 °C and the barrel temperature was about 240 °C. The blends were devolatilized under vacuum at the zone adjacent the die. The residence time in the extruder was about 1 minute.

Samples of the blends were injection moulded into ASTM test bars for the testing of notched izod and flex modulus by ASTM-256 and ASTM-790 methods respectively. The residence time in the injection molder was about 45 seconds with an exit temperature of about 270 °C. The results of these tests on various concentrations of the block copolymer in the polyketone polymer are shown in Table I together with the values obtained by testing of the unblended polyketone polymer.

TABLE I

| Block copolymer (% by weight) | Notched Izod-Room Temp (kg m/m) | Flex Modulus (MPa) |
|---|---|---|
| 0 (Control) | 26 | 1655 |
| 5 | 107 | 2013 |
| 10 (Comparative) | 21 | -- |
| 15 (Comparative) | 9.8 | -- |
| 20 (Comparative) | 7.6 | -- |

EXAMPLE 2

The procedure of Example 1B was employed except for a modified extruder die, to produce blend samples containing lower amounts of block copolymer. The values obtained for these samples as well as for unblended polyketone polymer are shown in Table II.

TABLE II

| Block copolymer (% by weight) | Notched Izod (kg m/m) | | Flex Modulus (MPa) |
|---|---|---|---|
| | Room Temp | -29 °C | |
| 0 (Control) | 22 | 6.0 | 1793 |
| 2 | 86 | 8.2 | 1800 |
| 5 | 105 | 26 | 2158 |
| 7 | 124 | 23 | 2000 |

EXAMPLE 3

The procedure of Example 1B was employed except that samples of the blend were injection moulded on a different injection moulder equipped with a 2.2/1 compression ratio 45mm screw. The cycle time for all samples was 30 seconds. About 0.5%wt Ethanox 330 (Ethanox is a trade mark) was added to improve stability. The moulded samples were immediately placed in a dry box and aged 24 hours prior to testing for notched Izod impact strength and flex modulus.

Results of the tests on various concentrations of the maleated block copolymer in the polyketone polymer are shown in Table III together with results for the unblended polyketone. It is seen that the compositions containing the stabilizer still have the same mechanical properties after ageing.

TABLE III

| Block copolymer (% by weight) | Flex Modulus (MPa) | Notched Izod (kg m/m) | |
|---|---|---|---|
| | | Room Temp. | -29 °C |
| 0 (Control) | 1793 | 22 | 6.0 |
| 2 | 1800 | 86 | 8.2 |
| 5 | 2158 | 105 | 26 |
| 7 | 2000 | 124 | 23 |
| 10 (Comparative) | 1703 | 21 | |
| 15 (Comparative) | 1255 | 9.8 | |
| 20 (Comparative) | 903 | 7.6 | |

EXAMPLE 4

The tensile properties of the polyketone and the polyketone/5% block copolymer blend of Example 3 were measured according to ASTM D-638 after sample preparation and after oven ageing for 2 weeks at 100 °C. Results are reported in Table IV.

TABLE IV

| Block copolymer (% by weight) | Tensile Strength (MPa) Break | Tensile Strength (MPa) Yield | Elongation (%) Break | Elongation (%) Yield |
|---|---|---|---|---|
| 0 (Control) | 63 | 56 | 125 | 19.5 |
| 5 | 60 | 56 | 87 | 29.0 |
| After oven ageing: | | | | |
| 0 (Control) | 55 | 64 | 26.1 | 16.3 |
| 5 | 50 | 66 | 29.5 | 14.6 |

EXAMPLE 5

The effect of polyketone LVN on impact strength for the maleated block copolymer blends was investigated using the procedures of Example 3 also for polyketones having LVNs of 1.74, 1.57, and 1.31. Impact strengths vs. maleated block copolymer contents are shown in Figure 1. Especially the data for blends with a polyketone of LVN 1.57, 1.74 and 1.96 show a marked non-linear behaviour, which indicates synergism.

The tests for flex modulus and tensile strength are usually made in the flow direction for injection moulded samples while impact strength is tested in a perpendicular direction to flow. Injection moulded polymers typically exhibit anisotropy, however, the polyketone/maleated block copolymer blends of the present invention exhibited no evidence of directional effects on the measured properties. Further, these samples show an increase in flex modulus with increased block copolymer content which is an apparent anomaly for typical polymer/block copolymer blends.

EXAMPLE 6 (Control)

A composition was prepared in a manner identical to the procedure of Example 3, except that 1% by weight of ethene acid copolymer, hereinafter referred to as "EAA", was added to the polyketone and that no block copolymer or stabilizer were used. Test results appear in Table V.

EXAMPLE 7 (Control)

A composition was prepared in a manner identical to the procedure of Example 6, except that 5% by weight of EAA was used instead of 1% by weight. Test results appear in Table V.

EXAMPLE 8

A composition containing 5% by weight of maleated block copolymer was prepared in a manner identical to the procedure of Example 3, however, 1% by weight EAA was added to the blend, and no stabilizer was present. Test results appear in Table V.

EXAMPLE 9

A composition was prepared in a manner identical to Example 8, except that 5% by weight of EAA was used. Test results appear in Table V.

EXAMPLE 10

A composition was prepared in a manner identical to the procedure of Example 3, however, the linear alternating terpolymer was changed to another one which had been prepared using a catalyst formed from palladium acetate, the anion of trifluoroacetic acid and 1,3-bis[di(2-methoxyphenyl)phosphino]propane. This terpolymer had a melting point of 228 °C and an LVN of 1.5 measured at 60 °C in m-cresol. Further, 83.50wt% of the terpolymer was blended with 0.5wt% of the aforementioned stabilizer, and 5wt% of the maleated, partially hydrogenated block copolymer of the SES/SEBS type having 28% by weight styrene and 2% by weight of maleic anhydride grafted to the mid-block of the block copolymer. Additionally, 10% by weight, based on total blend, of chopped ceramic fibers were added to the blend. The used refractory ceramic fiber has a fiber length about 13 mm, a mean fiber diameter of 2-3 microns and a specific gravity of 2.73 g/cm$^3$ and a melting point of 1790 °C. These ceramic fibers are sized with a commercial sizing designed for use with phenolic, epoxy, nylon, melamine and polyurethane systems. Additionally, 1% by weight of EAA was added to the blend. Test results appear in Table V.

EXAMPLE 11

A composition was prepared in a manner identical to Example 10, however, 79.50wt% instead of 83.5wt% of the terpolymer was blended with 5wt% instead of 1wt% of EAA. Test results appear in Table V.

EXAMPLE 12

A composition in a manner identical to that used in Example 10 except that the blend was only a three part blend of 5% by weight chopped ceramic fibers with 0.5% by weight stabilizer, the remainder being the polyketone. Test results appear in Table V.

EXAMPLES 13-14

Compositions were prepared in a manner identical to Example 12, however the amount of ceramic fibers was increased to 10% and 15% by weight, respectively, with a corresponding reduction in the amount of polyketone polymer. Test results appear in Table V.

EXAMPLE 15

A composition was prepared like in Example 13, except that the ceramic fiber (10%wt) had not been sized. The test results appear in Table V.

EXAMPLE 16 (Control)

A composition comprising 99.5 %wt of the terpolymer described in Example 10 and 0.5 %wt of the stabilizer, was prepared and tested as described in Example 10. The test results appear in Table V.

TABLE V

| ASTM | Notched Izod (mkg/m) D-256 | | Tensile modulus (MPa) D-638 | Flexural modulus (MPa) D-790 | Gardener Impact (cm/kg) D-3029 |
|---|---|---|---|---|---|
| Example | 20 °C | -29 °C | | | |
| 6 | 38 | - | - | 1751 | > 1790 |
| 7 | 40 | - | - | 1551 | 615 |
| 8 | 109 | - | 51 | 1951 | - |
| 9 | 19 | - | ND (> 50%) | 1593 | - |
| 10 | 21 | - | 55 | 2799 | 95 |
| 11 | 15 | - | - | 2062 | 50 |
| 12 | 6.0 | - | - | 2220 | 224 |
| 13 | 6.5 | - | - | 2572 | 179 |
| 14 | 7.0 | - | - | 2861 | 101 |
| 15 | 7.0 | - | - | 2227 | - |
| 16 | 22 | 6.0 | - | 2027 | - |

ND= not determined

From Table V it can be seen that adding the block copolymer at the 2-7% by weight level substantially increases notched Izod impact resistance. It also appears, according to the Gardener Impact Data, that adding 1% of a processing aid, like EAA promotes cavitation and enhances impact resistance by dispersing into the polymer matrix at the submicron level. This processing aid is preferred for use with the present compositions.

EXAMPLE 17

A) Another linear alternating terpolymer of carbon monoxide, ethylene and propylene was produced in the presence of a catalyst composition formed from palladium acetate, the anion of trifluoroacetic acid and 1,3-bis[di(2-methoxyphenyl)phosphino]propane. The melting point of the polymer was 220 °C and the polymer had a limiting viscosity number (LVN) of 1.29 (measured at 60 °C in m-cresol).

B) A blend of the polyketone polymer of paragraph A and 10% by weight, based on total blend, of a hydrogenated block copolymer characterized as a polymer of the SEBS type and having a molecular weight of about 57,000 and 32% styrene was produced by passing the polymeric components through a 30 mm Haake extruder operating at 270 °C under $N_2$ with dried feed. The resulting blend was uniform. A cold cut sample of the blend, stained with ruthenium tetroxide, was examined under an electron microscope. The hydrogenated block copolymer was present as a discrete phase having a phase diameter of about 0.7 microns.

Small plates of this blend were produced by compression moulding and examined by a center notched Izod impact testing technique. The values obtained for the polyketone polymer used in the blend and also for the blend are shown in Table VI.

TABLE VI

| Material | Izod (J/M) | |
|---|---|---|
| | RT-Izod | (-20 °C) |
| Polyketone | 94 | 47 |
| Blend | 164 | 73 |

**Claims**

**Claims for the following Contracting States : AT, BE, CH, DE, FR, GB, IT, LI, NL, SE**

1. Polymer composition characterized by comprising a non-miscible blend of a linear alternating polymer of carbon monoxide and at least one ethylenically unsaturated compound, having a LVN of 1.5 to 2, with from 2 to less than 10%wt of an at least partially hydrogenated block copolymer having at least one A block that is a predominantly polymerized vinyl aromatic compound block and at least one B block that is a predominantly polymerized conjugated alkadiene block.

2. A composition as claimed in claim 1, wherein the linear alternating polymer is represented by the formula

$$--[-CO-(-CH_2-CH_2-)-]_x---[-CO-(D)-]_y--$$

wherein D is a moiety derived from an ethylenically unsaturated hydrocarbon of at least 3 carbon atoms and the ratio of y:x is no more than 0.5.

3. A composition as claimed in claim 2, wherein D is a moiety of propylene.

4. A composition as claimed in claim 2, wherein y = 0.

5. A composition as claimed in any of claims 1-4, wherein the block copolymer is maleated.

6. A composition as claimed in claim 5, wherein:
each A block of the block copolymer is selected from a group consisting of styrene and alpha-methylstyrene, the average molecular weight of each A block being from 5,000 to 125,000;
each B block of the block copolymer is selected from a group consisting of butadiene and isoprene, the average molecular weight of each B block being from 10,000 to 300,000;
the A blocks being from 2% by weight to 55% by weight of the total block copolymer;
the block copolymer has a residual B block unsaturation from 0.5% to 20% of the original unsaturation of the B block of said block copolymer; and

the block copolymer has from 0.02% by weight to 10% by weight, based on total polymer, of moieties of a maleic acid compound grafted to the B block.

**7.** A composition as claimed in any of claims 1-6, wherein as an additional component a ceramic fiber reinforcement is present.

**8.** A composition as claimed in claim 7, wherein the concentration of the fiber is from 0.1 to 45% by weight, based on the weight of the blend.

**9.** A composition as claimed in any of claims 1-8, wherein as an additional component a processing aid is present.

**10.** A composition as claimed in claim 9, wherein the processing aid is a copolymer of an alpha-olefin and an alpha,beta-ethylenically unsaturated carboxylic acid.

**Claims for the following Contracting State : ES**

**1.** Process for the preparation of a polymer composition characterized in that a non-miscible blend is prepared by blending a linear alternating polymer of carbon monoxide and at least one ethylenically unsaturated compound, having a LVN of 1.5 to 2, with from 2 to less than 10 %wt of an at least partially hydrogenated block copolymer having at least one A block that is a predominantly polymerized vinyl aromatic compound block and at least one B block that is a predominantly polymerized conjugated alkadiene block.

**2.** A process as claimed in claim 1, wherein the linear alternating polymer is represented by the formula

$$-[CO-(CH_2-CH_2)]_x-[CO-(D)]_y-$$

wherein D is a moiety derived from an ethylenically unsaturated hydrocarbon of at least 3 carbon atoms and the ratio of y:x is no more than 0.5.

**3.** A process as claimed in claim 2, wherein D is a moiety of propylene.

**4.** A process as claimed in claim 2, wherein $y = 0$.

**5.** A process as claimed in any of claims 1-4, wherein the block copolymer is maleated.

**6.** A process as claimed in claim 5, wherein:

each A block of the block copolymer is selected from a group consisting of styrene and alpha-methylstyrene, the average molecular weight of each A block being from 5,000 to 125,000;

each B block of the block copolymer is selected from a group consisting of butadiene and isoprene, the average molecular weight of each B block being from 10,000 to 300,000;

the A blocks being from 2% by weight to 55% by weight of the total block copolymer;

the block copolymer has a residual B block unsaturation from 0.5% to 20% of the original unsaturation of the B block of said block copolymer; and

the block copolymer has from 0.02% by weight to 10% by weight, based on total polymer, of moieties of a maleic acid compound grafted to the B block.

**7.** A process as claimed in any of claims 1-6, wherein as an additional component a ceramic fiber reinforcement is present.

**8.** A process as claimed in claim 7, wherein the concentration of the fiber is from 0.1 to 45% by weight, based on the weight of the blend.

**9.** A process as claimed in any of claims 1-8, wherein as an additional component a processing aid is present.

**10.** A process as claimed in claim 9, wherein the processing aid is a copolymer of an alpha-olefin and an alpha,beta-ethylenically unsaturated carboxylic acid.

**Patentansprüche**
**Patentansprüche für folgende Vertragsstaaten : AT, BE, CH, DE, FR, GB, IT, LI, NL, SE**

**1.** Polymerzusammensetzung, dadurch gekennzeichnet, daß sie ein unmischbares Gemisch aus einem linearen alternierenden Polymer von Kohlenmonoxid und wenigstens einer ethylenisch ungesättigten Verbindung, mit einer Grenzviskositätszahl von 1,5 bis 2, mit von 2 bis weniger als 10 Gew.-% eines wenigstens partiell hydrierten Blockcopolymers mit wenigstens einem Block A, der ein Block aus überwiegend polymerisierter vinylaromatischer Verbindung ist, und wenigstens einem Block B, der ein überwiegend polymerisierter konjugierter Alkadien-Block ist, umfaßt.

**2.** Zusammensetzung nach Anspruch 1, worin das lineare alternierende Polymer durch die Formel

$$-[CO-(CH_2-CH_2)]_x-[CO-(D)]_y-$$

dargestellt ist, worin D ein von einem ethylenisch ungesättigten Kohlenwasserstoff mit wenigstens 3 Kohlenstoffatomen abgeleiteter Rest ist und das Verhältnis y:x nicht über 0,5 liegt.

**3.** Zusammensetzung nach Anspruch 2, worin D ein Propylenrest ist.

**4.** Zusammensetzung nach Anspruch 2, worin y den Wert 0 hat.

**5.** Zusammensetzung nach einem der Ansprüche 1 bis 4, worin das Blockcopolymer maleinisiert ist.

**6.** Zusammensetzung nach Anspruch 5, worin:
jeder Block A des Blockcopolymers aus einer aus Styrol und $\alpha$-Methylstyrol bestehenden Gruppe ausgewählt ist, wobei das mittlere Molekulargewicht jedes Blocks A von 5.000 bis 125.000 beträgt;
jeder Block B des Blockcopolymers aus einer aus Butadien und Isopren bestehenden Ggruppe ausgewählt ist, wobei das mittlere Molekulargewicht jedes Blocks B von 10.000 bis 300.000 beträgt;
die Blöcke A von 2 Gew.-% bis 55 Gew.-% des Gesamtblockcopolymers ausmachen;
das Blockcopolymer eine restliche Block B-Unsättigung von 0,5 bis 20 % der ursprünglichen Unsättigung des Blocks B des Blockcopolymers aufweist; und
das Blockcopolymer von 0,02 Gew.-% bis 10 Gew.-%, bezogen auf Gesamtpolymer, an Resten einer auf den Block B aufgepfropften Maleinsäureverbindung enthält.

**7.** Zusammensetzung nach einem der Ansprüche 1 bis 6, worin als eine zusätzliche Komponente eine keramische Faserverstärkung zugegen ist.

**8.** Zusammensetzung nach anspruch 7, worin die Konzentration der Faser von 0,1 bis 45 Gew.-%, bezogen auf das Gewicht des Gemisches, beträgt.

**9.** Zusammensetzung nach einem der Ansprüche 1 bis 8, worin als eine zusätzliche Komponente ein Verarbeitungshilfsmittel vorliegt.

**10.** Zusammensetzung nach Anspruch 9, worin das Verarbeitungshilfsmittel ein Copolymer aus einem $\alpha$-Olefin und einer $\alpha,\beta$-ethylenisch ungesättigten Carbonsäure ist.

**Patentansprüche für folgenden Vertragsstaat : ES**

**1.** Verfahren zur Herstellung einer Polymerzusammensetzung, dadurch gekennzeichnet, daß ein unmischbares Gemisch durch Vermischen eines linearen alternierenden Polymers von Kohlenmonoxid und wenigstens einer ethylenisch ungesättigten Verbindung, mit einer Grenzviskositätszahl von 1,5 bis 2, mit von 2 bis weniger als 10 Gew.-% eines wenigstens partiell hydrierten Blockcopolymers mit wenigstens einem Block A, der ein Block aus überwiegend polymerisierter vinylaromatischer Verbindung ist, und wenigstens einem Block B, der ein überwiegend polymerisierter konjugierter Alkadien-Block ist, hergestellt wird.

2. Verfahren nach Anspruch 1, worin das lineare alternierende Polymer durch die Formel

$$-[-CO-(CH_2-CH_2-)-]_x-[-CO-(D)-]_y-$$

dargestellt ist, worin D ein von einem ethylenisch ungesättigten Kohlenwasserstoff mit wenigstens 3 Kohlenstoffatomen abgeleiteter Rest ist und das Verhältnis y:x nicht über 0,5 liegt.

3. Verfahren nach Anspruch 2, worin D ein Propylenrest ist.

4. Verfahren nach Anspruch 2, worin y den Wert 0 hat.

5. Verfahren nach einem der Ansprüche 1 bis 4, worin das Blockcopolymer maleinisiert ist.

6. Verfahren nach Anspruch 5, worin:
jeder Block A des Blockcopolymers aus einer aus Styrol und α-Methylstyrol bestehenden Gruppe ausgewählt ist, wobei das mittlere Molekulargewicht jedes Blocks A von 5.000 bis 125.000 beträgt;
jeder Block B des Blockcopolymers aus einer aus Butadien und Isopren bestehenden Ggruppe ausgewählt ist, wobei das mittlere Molekulargewicht jedes Blocks B von 10.000 bis 300.000 beträgt;
die Blöcke A von 2 Gew.-% bis 55 Gew.-% des Gesamtblockcopolymers ausmachen;
das Blockcopolymer eine restliche Block B-Unsättigung von 0,5 bis 20 % der ursprünglichen Unsättigung des Blocks B des Blockcopolymers aufweist; und
das Blockcopolymer von 0,02 Gew.-% bis 10 Gew.-%, bezogen auf Gesamtpolymer, an Resten einer auf den Block B aufgepfropften Maleinsäureverbindung enthält.

7. Verfahren nach einem der Ansprüche 1 bis 6, worin als eine zusätzliche Komponente eine keramische Faserverstärkung zugegen ist.

8. Verfahren nach Anspruch 7, worin die Konzentration der Faser von 0,1 bis 45 Gew.-%, bezogen auf das Gewicht des Gemisches, beträgt.

9. Verfahren nach einem der Ansprüche 1 bis 8, worin als eine zusätzliche Komponente ein Verarbeitungshilfsmittel vorliegt.

10. Verfahren nach Anspruch 9, worin das Verarbeitungshilfsmittel ein Copolymer aus einem α-Olefin und einer α,β-ethylenisch ungesättigten Carbonsäure ist.

**Revendications**
**Revendications pour les Etats contractants suivants : AT, BE, CH, DE, FR, GB, IT, LI, NL, SE**

1. Composition polymère caractérisée en ce qu'elle comporte un mélange non-miscible d'un polymère alterné linéaire de monoxyde de carbone et d'au moins un composé à insaturation éthylènique, présentant un LVN de 1,5 à 2, avec de 2 à moins de 10% poids d'au moins un copolymère séquencé partiellement hydrogéné, ayant au moins une séquence A qui est une séquence d'un composé vinyl-aromatique polymérisé de façon prédominante et au moins une séquence B qui est une séquence alkadiène conjuguée polymérisée de façon prédominante.

2. Composition telle que revendiquée dans la revendication 1, dans laquelle le polymère alterné linéaire est représenté par la formule

$$--[-CO-(-CH_2-CH_2-)-]_x---[-CO-(D)-]_y--$$

dans laquelle D est une portion dérivée d'un hydrocarbone à insaturation éthylénique d'au moins 3 atomes de carbone et le rapport de y:x ne dépasse pas 0,5.

**3.** Une composition telle que revendiquée dans la revendication 2, dans laquelle D est une portion de propylène.

**4.** Une composition telle que revendiquée dans la composition 2, dans laquelle y = 0.

**5.** Une composition telle que revendiquée dans l'une quelconque des revendications 1 à 4, dans laquelle le copolymère séquencé est maléaté.

**6.** Une composition telle que revendiquée dans la revendication 5, dans laquelle chaque séquence A du copolymère séquencé est choisie dans un groupe constitué du styrène et de l'alpha-méthylstyrène, le poids moléculaire moyen de chaque séquence A étant de 5.000 à 125.000 ;

chaque séquence B du copolymère séquencé est choisie dans un groupe constitué par un groupe butadiène et isoprène, le poids moléculaire moyen de chaque séquence B étant de 10.000 à 300.000 ;

les séquences A étant de 2% en poids à environ 55% en poids du copolymère séquencé total ;

le copolymère séquencé présente une insaturation de la séquence B résiduelle de 0,5% à 20% de l'insaturation d'origine de la séquence B dudit copolymère séquencé ; et

le copolymère séquencé présente de 0,02% en poids à 20% en poids en se basant sur le polymère total, de portions d'un composé à base d'acide maléique, greffé sur la séquence A.

**7.** Une composition telle que revendiqué dans l'une quelconque des revendications 1 à 6 dans laquelle une fibre céramique de renforcement est présente en tant que composant supplémentaire.

**8.** Une composition telle que revendiquée dans la revendication 7 dans laquelle la concentration de la fibre est de 0,1 à 45% en poids, en se basant sur le poids du mélange.

**9.** Une composition telle que revendiquée dans l'une quelconque des revendications 1 à 8 dans laquelle un adjuvant de traitement est prévu en tant que composant supplémentaire.

**10.** Une composition telle que revendiquée dans la revendication 9, dans laquelle l'adjuvant de traitement est un copolymère d'une alpha-oléfine et d'un acide carboxylique à insaturation éthylénique alpha, béta.

**Revendications pour l'Etat contractant suivant : ES**

**1.** Procédé pour la préparation d'une composition polymère, caractérisé en ce qu'un mélange non-miscible est préparé en mélangeant un polymère alterné linéaire de monoxyde de carbone et d'au moins un composé à insaturation éthylènique, présentant un LVN de 1,5 à 2, avec de 2 à moins de 10% poids d'au moins un copolymère séquencé partiellement hydrogéné, ayant au moins une séquence A qui est une séquence d'un composé vinylaromatique polymérisé de façon prédominante et au moins une séquence B qui est une séquence alkadièn conjuguée polymérisée de façon prédominante.

**2.** Procédé tel que revendiqué dans la revendication 1, dans lequel le polymère alterné linéaire est représenté par la formule

$$--[-CO-(-CH_2-CH_2-)-]_x---[-CO-(D)-]_y--$$

dans laquelle D est une portion dérivée d'un hydrocarbone à insaturation éthylénique d'au moins 3 atomes de carbone et le rapport de y:x ne dépasse pas 0,5.

**3.** Un procédé tel que revendiqué dans la revendication 2, dans lequel D est une portion de propylène.

**4.** Un procédé tel que revendiqué dans la revendication 2, dans lequel y = 0.

**5.** Un procédé tel que revendiqué dans l'une quelconque des revendications 1 à 4, dans lequel le copolymère séquencé est maléaté.

**6.** Un procédé tel que revendiqué dans la revendication 5, dans lequel chaque séquence A du copolymère séquencé est choisie dans un groupe constitué du styrène et de l'alpha-méthylstyrène, le poids moléculaire moyen de chaque séquence A étant de 5.000 à 125.000 ;

chaque séquence B du copolymère séquencé est choisie dans un groupe constitué par un groupe butadiène et isoprène, le poids moléculaire moyen de chaque séquence B étant de 10.000 à 300.000 ;

les séquences A étant de 2% en poids à environ 55% en poids du copolymère séquencé total ;

le copolymère séquencé présente une insaturation de la séquence B résiduelle de 0,5% à 20% de l'insaturation d'origine de la séquence B dudit copolymère séquencé ; et

le copolymère séquencé présente de 0,02% en poids à 20% en poids en se basant sur le polymère total, de portion d'un composé à base d'acide maléique, greffé sur la séquence A.

**7.** Un procédé tel que revendiqué dans l'une quelconque des revendications 1 à 6 dans lequel une fibre céramique de renforcement est présente en tant que composant supplémentaire.

**8.** Un procédé tel que revendiqué dans la revendication 7 dans lequel la concentration de la fibre est de 0,1 à 45% en poids, en se basant sur le poids du mélange.

**9.** Un procédé tel que revendiqué dans l'une quelconque des revendications 1 à 8 dans lequel un adjuvant de traitement est prévu en tant que composant supplémentaire.

**10.** Un procédé tel que revendiqué dans la revendication 9, dans lequel l'adjuvant de traitement est un copolymère d'une alpha-oléfine et d'un acide carboxylique à insaturation éthylénique alpha, béta.

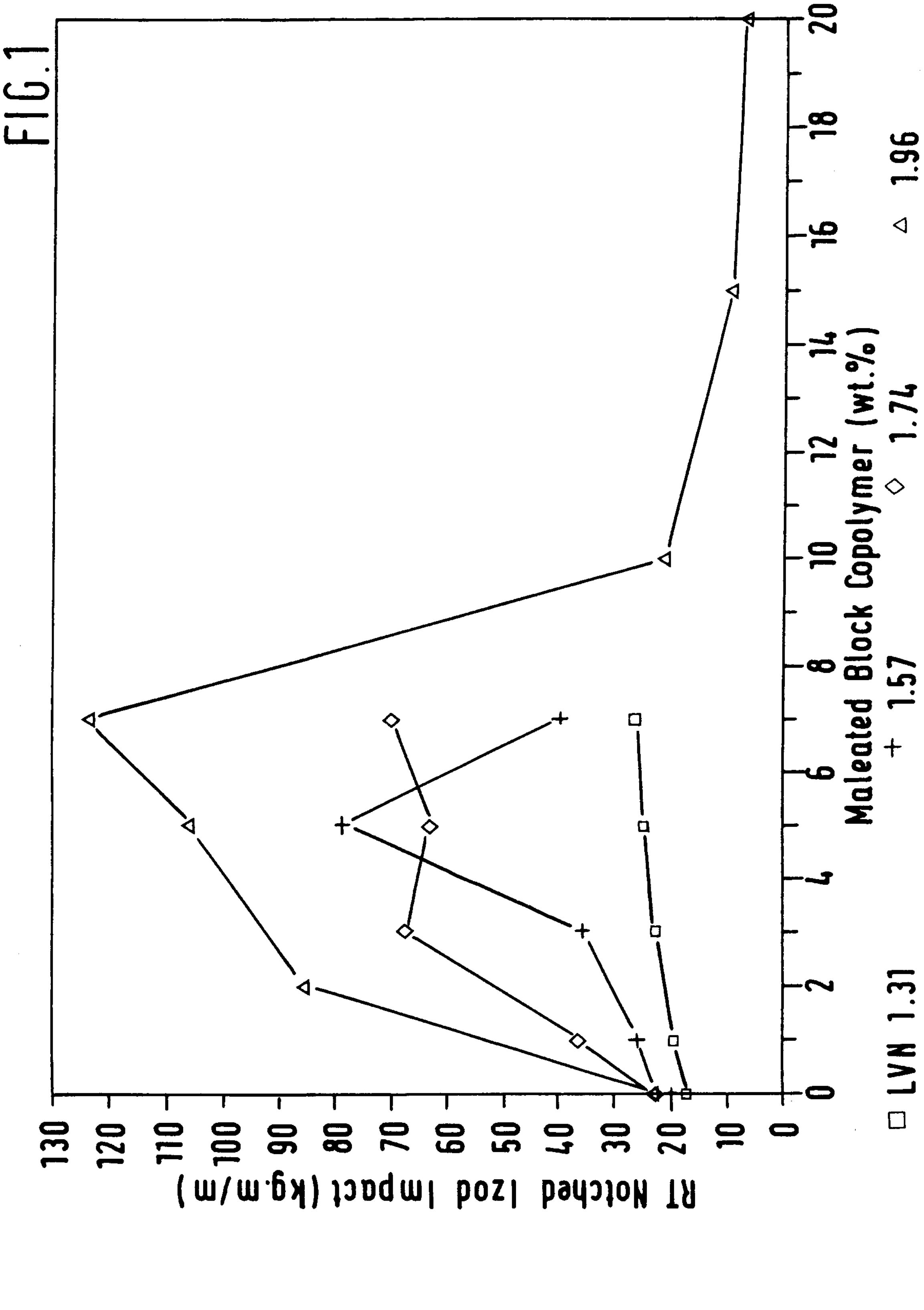
RT Notched Izod Impact (kg.m/m)
0
10
20
30
40
50
60
70
80
90
100
110
120
130
Maleated Block Copolymer (wt.%)
0
2
4
6
8
10
12
14
16
18
20
□ LVN 1.31
+ 1.57
◇ 1.74
△ 1.96

FIG.1